# EUROPÄISCHE PATENTSCHRIFT

(11) **EP 2 215 376 B1**
(45) Veröffentlichungstag und Bekanntmachung des Hinweises auf die Patenterteilung: **09.02.2011**
(21) Anmeldenummer: 08844402.1
(22) Anmeldetag: 23.10.2008
(51) Int. Cl.: F16D 65/14, F16D 55/00

(54) **SELBSTVERSTÄRKENDE SCHEIBENBREMSE**
SELF-REINFORCING DISC BRAKE
FREIN À DISQUE AUTO-AMPLIFIANT

(30) Priorität: 29.10.2007 DE 102007051556
(43) Veröffentlichungstag der Anmeldung: 11.08.2010
(73) Patentinhaber: Robert Bosch GmbH, 70442 Stuttgart (DE)
(72) Erfinder: VOLLERT, Herbert, 71665 Vaihingen/enz (DE); BAUMANN, Dietmar, 71282 Hemmingen (DE); HENKE, Andreas, 71254 Ditzingen (DE); FOITZIK, Bertram, 74360 Ilsfeld (DE); NAGEL, Willi, 71686 Remseck/hochdorf (DE); HOFMANN, Dirk, 794 01 Krnov-pod Cvilinem (CZ)
(86) Internationale Anmeldenummer: PCT/EP2008/064388
(87) Internationale Veröffentlichungsnummer: WO 2009/056485

(56) Entgegenhaltungen:
- EP-A- 1 655 506
- EP-A- 1 760 352
- GB-A- 2 278 900
- US-B1- 6 991 074

## Beschreibung

### Stand der Technik

Die Erfindung betrifft eine selbstverstärkende Scheibenbremse mit den Merkmalen des Oberbegriffs des Anspruchs 1. Die Scheibenbremse ist insbesondere als Radbremse eines Kraftfahrzeugs vorgesehen.

Eine derartige Scheibenbremse ist bekannt aus der Offenlegungsschrift DE 103 02 516 A1. Die bekannte Scheibenbremse weist einen Bremssattel auf, in dem auf einer Seite einer Bremsscheibe ein Reibbremsbelag angeordnet ist, der zu einer Bremsbetätigung mit einer Betätigungseinrichtung gegen die Bremsscheibe drückbar ist.

Als Selbstverstärkungseinrichtung weist die bekannte Scheibenbremse einen Keilmechanismus mit einer schräg in einem Keilwinkel zur Bremsscheibe verlaufenden Keilfläche auf, an der sich der Reibbremsbelag abstützt und an der entlang er beweglich ist. Übt die drehende Bremsscheibe eine Reibungskraft auf den bei betätigter Bremse gegen sie gedrückten Reibbremsbelag aus, bewirkt die Abstützung des Reibbremsbelags im Keilwinkel an der Keilfläche des Keilmechanismus eine Stützkraft auf den Reibbremsbelag, die senkrecht zur Keilfläche gerichtet ist. Eine Komponente der Stützkraft beaufschlagt den Reibbremsbelag senkrecht zur Bremsscheibe. Diese Komponente der Stützkraft des Keilmechanismus ist eine Andruckkraft, die den Reibbremsbelag gegen die Bremsscheibe drückt. Die vom Keilmechanismus bewirkte Andruckkraft beaufschlagt den Reibbremsbelag zusätzlich zu einer von der Betätigungseinrichtung ausgeübten Betätigungskraft, die gemeinsam mit der Andruckkraft eine Spannkraft bewirkt, mit der der Reibbremsbelag gegen die Bremsscheibe gedrückt wird. In geschilderter Weise wandelt der Keilmechanismus die von der drehenden Bremsscheibe auf den bei betätigter Scheibenbremse gegen sie gedrückten Reibbremsbelag ausgeübte Reibungskraft in eine den Reibbremsbelag gegen die Bremsscheibe drückende Andruckkraft. Durch die zusätzlich zur Betätigungskraft auf den Reibbremsbelag ausgeübte Andruckkraft ist eine Bremskraft der Scheibenbremse erhöht, der Keilmechanismus bewirkt eine Selbstverstärkung der Scheibenbremse.

Als Betätigungseinrichtung sieht die bekannte Scheibenbremse wahlweise eine elektromechanische Betätigungseinrichtung mit einem Elektromotor, ggf. einem Untersetzungsgetriebe und einem Spindeltrieb, also einem Schraubgetriebe, oder wahlweise eine hydraulische Betätigungseinrichtung mit einem Hydraulikkolben vor. Die Betätigungseinrichtung ist auf der gleichen Seite wie der Reibbremsbelag und der die Selbstverstärkungseinrichtung bildende Keilmechanismus am Bremssattel befestigt.

Der Keilmechanismus der bekannten Scheibenbremse beaufschlagt den Bremssattel im Sinne einer Aufweitung. Da der Bremssattel in der Praxis nicht absolut steif ist, bewirkt der Keilmechanismus eine elastische Aufweitung des Bremssattels, die einen Betätigungsweg der Betätigungseinrichtung verlängert. Eine zur Bremsbetätigung erforderliche Betätigungsenergie ist entsprechend vergrößert.

### Offenbarung der Erfindung

Die erfindungsgemäße Scheibenbremse mit den Merkmalen des Anspruchs 1 weist einen eigenen Halter für die Betätigungseinrichtung auf, der nicht von der Selbstverstärkungseinrichtung mit einer Kraft oder einem Moment beaufschlagt wird. Dadurch vergrößert eine elastische Aufweitung des Bremssattels auf Grund von Kräften oder Momenten, die die Selbstverstärkungseinrichtung ausübt, nicht den Betätigungsweg, den die Betätigungseinrichtung zum Drücken des Reibbremsbelags gegen die Bremsscheibe und zum Aufbau der Betätigungskraft ausführt. Ebenso wenig wird eine Betätigungsenergie, die die Betätigungseinrichtung zur Bremsbetätigung aufbringen muss, durch eine elastische Aufweitung des Bremssattels vergrößert. Weiterer Vorteil der Erfindung ist, dass der Halter der Betätigungseinrichtung nur der von der Betätigungseinrichtung ausgeübten Betätigungskraft und nicht der vollen Spannkraft der Scheibenbremse standhalten muss, seine Verformung - gleiche Steifigkeit wie der Bremssattel vorausgesetzt - ist in Folge dessen verringert. Auch das trägt zu einem kurzen Betätigungsweg und einer niedrigen Betätigungsenergie bei. Der Bremssattel selbst kann weicher und folglich leichter ausgelegt werden. Ein weicherer Bremssattel verursacht weniger Geräusche und reduziert eine Schwingungsanregung. Da die Steifigkeit des Halters unabhängig von der Steifigkeit des Bremssattels wählbar ist, ergibt die Erfindung zusätzliche Möglichkeiten zur gezielten Beeinflussung der Geräuschbildung und des Schwingungsverhaltens, die ein Bremssattel, an dem die Betätigungseinrichtung auf der gleichen Seite wie die Selbstverstärkungseinrichtung angebracht ist, nicht hat.

Die Unteransprüche haben vorteilhafte Ausgestaltungen und Weiterbildungen der im Anspruch 1 angegebenen Erfindung zum Gegenstand.

Der Halter der Betätigungseinrichtung der erfindungsgemäßen Scheibenbremse kann ein vom Bremssattel separates Teil sein, das beispielsweise einstückiger Bestandteil eines Bremsenhalters oder an einem Achsschenkel oder dgl. angeschraubt ist. Anspruch 2 sieht vor, dass der Halter mit dem Bremssattel verbunden, beispielsweise verschraubt oder einstückig ist. Anders als im Stand der Technik ist der Halter allerdings auf einer Seite mit dem Bremssattel verbunden, die bezüglich der Bremsscheibe derjenigen Seite gegenüber liegt, auf der der Reibbremsbelag angeordnet ist, den die Betätigungseinrichtung beaufschlagt. Im Stand der Technik ist auch die Selbstverstärkungseinrichtung auf dieser Seite der Bremsscheibe angeordnet.

Anstelle eines Keilmechanismus kann die erfindungsgemäße Scheibenbremse auch eine andere mechanische Selbstverstärkungseinrichtung aufweisen, beispielsweise einen Hebelmechanismus mit einem oder mehreren schräg zur Bremsscheibe stehenden, den Reibbremsbelag abstützendenden Stützhebeln. Auch eine nicht-mechanische, beispielsweise hydraulische Selbstverstärkungseinrichtung ist möglich. Hydraulische Selbstverstärkungseinrichtungen sind an sich bekannt und brauchen deswegen hier nicht erläutert werden. Anstelle eines Keilmechanismus kann die erfindungsgemäße Scheibenbremse auch einen Rampenmechanismus aufweisen. Im Unterscheid zum Keilmechanismus, bei dem die Keilfläche über ihre gesamte Länge den gleichen Keilwinkel zur Bremsscheibe aufweist, kann eine Rampe eines Rampenmechanismus eine sich ändernde Steigung aufweisen. Dadurch ändert sich die Höhe der Selbstverstärkung. Bei hoher Bremskraft kann eine große Selbstverstärkung erreicht werden.

Die Erfindung ist nicht auf eine elektromechanische Betätigungseinrichtung beschränkt, sie kann auch eine andere, beispielsweise pneumatische oder hydraulische Betätigungseinrichtung aufweisen. Eine elektromechanische Betätigungseinrichtung ist nicht auf einen Elektromotor mit Getriebe beschränkt, auch ein Linearmotor, ein Elektromagnet oder ein Piezoelement sind zur Bremsbetätigung möglich.

### Kurze Beschreibung der Zeichnung

Die Erfindung wird nachfolgend anhand eines in der Zeichnung dargestellten Ausführungsbeispiels näher erläutert. Es zeigen:
- Figur 1: eine selbstverstärkende Scheibenbremse gemäß der Erfindung mit Blickrichtung radial von außen auf eine Bremsscheibe;
- Figur 2: die Scheibenbremse aus Figur 1 mit entgegengesetzter Blickrich- tung; und

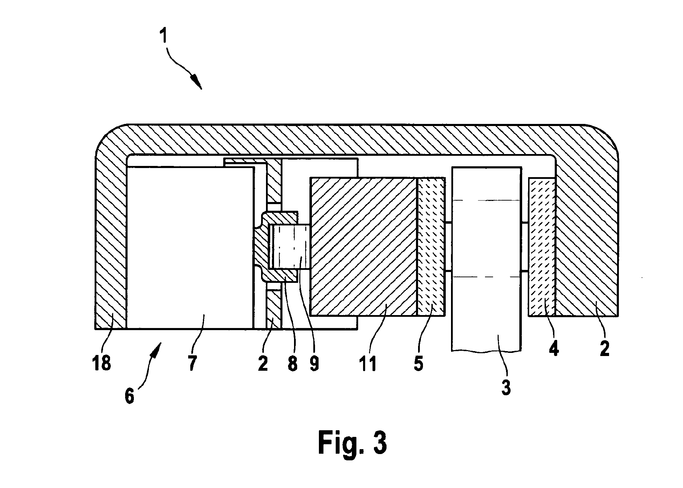

- Figur 3: einen Schnitt der Scheibenbremse aus Figur 1 in einer Radialebene zur Bremsscheibe gemäß Linie III-III in Figur 1 in größerem Maß- stab.

Die Figuren sind als schematisierte und vereinfachte Darstellungen zur Erläuterung und zum Verständnis der Erfindung zu verstehen.

### Ausführungsform der Erfindung

Die in der Zeichnung dargestellte erfindungsgemäße Scheibenbremse 1 weist einen Bremssattel 2 auf, in dem beiderseits einer Bremsscheibe 3 zwei Reibbremsbeläge 4, 5 angeordnet sind. Einer der beiden Reibbremsbeläge 4 ist unbeweglich im Bremssattel 2 angeordnet und wird nachfolgend als fester Reibbremsbelag 4 bezeichnet werden. Der andere Reibbremsbelag 5 ist in noch zu erläuternder Weise beweglich im Bremssattel 2 und wird nachfolgend als beweglicher Reibbremsbelag 5 bezeichnet werden.

Die Scheibenbremse 1 weist eine elektromechanische Betätigungseinrichtung 6 auf, die auf der gleichen Seite der Bremsscheibe 3 angeordnet ist wie der bewegliche Reibbremsbelag 5. Die Betätigungseinrichtung 6 muss nicht zwingend elektromechanisch sein, sie kann auch beispielsweise hydraulisch, pneumatisch oder mechanisch sein, letzteres beispielsweise über einen Seilzug und/oder Hebel. Die Betätigungseinrichtung 6 weist einen Elektromotor 7 und einen Spindeltrieb auf, der eine rotatorische Bewegung des Elektromotors 7 in eine translatorische Bewegung zum Drücken des beweglichen Reibbremsbelags 5 an die Bremsscheibe 3 wandelt. Dem Elektromotor und dem Spindeltrieb kann ein Untersetzungsgetriebe, beispielsweise ein Planetengetriebe, zwischengeschaltet sein, das in der Zeichnung nicht dargestellt ist. An einem Ende einer Spindel 8 des Spindeltriebs ist zur Reibungsminderung eine Rolle 9 drehbar gelagert, mit der der Spindeltrieb den beweglichen Reibbremsbelag 5 beaufschlagt.

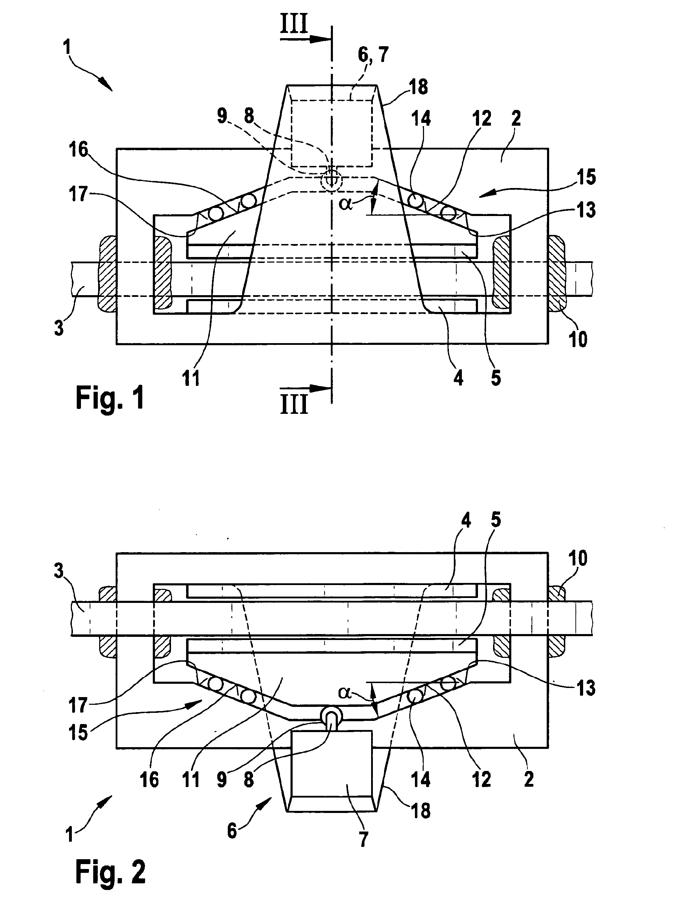

Zu einer Bremsbetätigung wird durch Bestromen des Elektromotors 7 der bewegliche Reibbremsbelag 5 gegen die Bremsscheibe 3 gedrückt. Der Bremssattel 2 ist als Schwimmsattel ausgebildet, d. h. er ist quer zur Bremsscheibe 3 verschiebbar geführt. Durch Drücken des beweglichen Reibbremsbelags 5 gegen die eine Seite der Bremsscheibe 3 wird der Bremssattel 2 quer zur Bremsscheibe 3 verschoben und drückt den festen Reibbremsbelag 4 gegen die andere Seite der Bremsscheibe 3. Die Scheibenbremse 1 wird zugespannt und bremst die Bremsscheibe 3. Führungen 10, die den Bremssattel 2 quer zur Bremsscheibe 3 verschiebbar führen, sind in Figuren 1 und 2 symbolisch angedeutet.

Auf einer der Bremsscheibe 3 abgewandten Rückseite weist der bewegliche Reibbremsbelag 5 einen Keilkörper 11 mit schräg in einem Keilwinkel α zur Bremsscheibe 3 verlaufenden Keilflächen 12 auf. Mit den Keilflächen 12 stützt sich der Keilkörper 11 an korrespondierenden Keilflächen 13 des Bremssattels 2 ab. Die Keilflächen 13 des Bremssattels 2 verlaufen ebenfalls im Keilwinkel α schräg zur Bremsscheibe 3, der Keilkörper 11 und mit ihm der bewegliche Reibbremsbelag 5 ist entlang der Keilflächen 13 im Bremssattel 2 verschiebbar. Zur Reibungsminderung sind Rollen 14 als Wälzkörper zwischen den Keilflächen 12, 13 des Keilkörpers 11 und des Bremssattels 2 angeordnet.

Wird zur Bremsbetätigung bei drehender Bremsscheibe 3 der bewegliche Reibbremsbelag 5 mit der Betätigungseinrichtung 6 gegen die Bremsscheibe 3 gedrückt, übt diese eine Reibungskraft auf den beweglichen Reibbremsbelag 5 aus. Die Reibungskraft wirkt auf den Keilkörper 11 ein, der an der Rückseite des beweglichen Reibbremsbelags 5 angebracht ist. Die von der drehenden Bremsscheibe 3 auf den gegen sie gedrückten beweglichen Reibbremsbelag 5 ausgeübte Reibungskraft beaufschlagt den Keilkörper 11 in einen enger werdenden Keilspalt zwischen der Keilfläche 13 des Bremssattels 2 und der Bremsscheibe 3. Gemäß dem Keilprinzip übt die Keilfläche 13 des Bremssattels 2, an der sich der bewegliche Reibbremsbelag 5 über seinen Keilkörper 11 abstützt, eine Stützkraft aus, die senkrecht zur Keilfläche 13 gerichtet ist. Die Stützkraft weist eine Komponente senkrecht zur Bremsscheibe 3 auf, die als Andruckkraft bezeichnet wird. Die Andruckkraft drückt den Reibbremsbelag 5 zusätzlich zu der von der Betätigungseinrichtung 6 aufgebrachten Betätigungskraft gegen die Bremsscheibe 3. Der Keilkörper 11 mit den Keilflächen 12 und die komplementären Keilflächen 13 des Bremssattels 2 bilden einen Keilmechanismus 15, der in beschriebener Weise eine von der Betätigungseinrichtung 6 aufgebrachte Betätigungskraft und damit eine Bremskraft der Scheibenbremse 1 verstärkt. Mit dem Keilmechanismus 15 weist die Scheibenbremse 1 eine mechanische Selbstverstärkungseinrichtung auf. Für eine umgekehrte Drehrichtung der Bremsscheibe 3 weist der Keilmechanismus 15 Keilflächen 16, 17 mit entgegengesetzter Neigung auf. Der Keilwinkel α kann für beide Drehrichtungen der Bremsscheibe 3 gleich oder verschieden sein.

Die Betätigungseinrichtung 6 ist an einem Halter 18 befestigt, der auf der Seite des festen Reibbremsbelags 4 einstückig mit dem Bremssattel 2 ist. Der Halter 18 ist also auf einer dem beweglichen Reibbremsbelag 5 und dem Keilmechanismus 15 gegenüber liegenden Seite der Bremsscheibe 3 mit dem Bremssattel 2 verbunden. Der Halter 18 übergreift die Bremsscheibe 3 an ihrem Umfang und ragt auf die Seite der Bremsscheibe 3, auf der der Keilmechanismus 15 und der bewegliche Reibbremsbelag 5 angeordnet sind. Auf dieser Seite der Bremsscheibe 3 befindet sich auch die Betätigungseinrichtung 6, die am Halter 18 angebracht ist. Denkbar für den Halter 18 wäre beispielsweise auch eine Rahmenkonstruktion mit zwei Zugankern, die in Umfangsrichtung der Bremsscheibe 3 neben dem beweglichen Reibbremsbelag 5 angeordnet sind und die Bremsscheibe 3 in Höhe des Reibbremsbelags 5 übergreifen (nicht dargestellt). Dadurch wird eine Biegebeanspruchung des Halters verringert. Der Halter 18 wird nicht von Kräften oder Momenten des Keilmechanismus 15 beaufschlagt. Insbesondere wirkt sich eine Aufweitung des Bremssattels 2 bei einer Bremsbetätigung nicht auf den Halter 18 und auf den Betätigungsweg, den die Betätigungseinrichtung 6 zur Erzielung einer bestimmten Bremskraft ausführen muss, aus. Durch einen steifen, sich unter Belastung wenig verformenden Halter 18 wird der Betätigungsweg der Betätigungseinrichtung 6 auch bei einem vergleichsweise weichen Bremssattel 2 kurz gehalten. Der Halter 18 wird nur von der Betätigungskraft der Betätigungseinrichtung 6 und nicht von der Andruckkraft, die der Keilmechanismus 15 bewirkt, beaufschlagt, wodurch eine elastische Verformung des Halters 18 gering ist.

## Patentansprüche

1. Selbstverstärkende Scheibenbremse, mit einem Bremssattel (2), in dem ein Reibbremsbelag (5) angeordnet ist, mit einer Betätigungseinrichtung (6), mit der der Reibbremsbelag (5) gegen eine Bremsscheibe (3) drückbar ist, und mit einer Selbstverstärkungseinrichtung (15), die eine bei betätigter Scheibenbremse (1) von der drehenden Bremsscheibe (3) auf den gegen sie gedrückten Reibbremsbelag (5) ausgeübte Reibungskraft in eine Andruckkraft wandelt, die den Reibbremsbelag (5) gegen die Bremsscheibe (3) drückt, **dadurch gekennzeichnet, dass** die Scheibenbremse (1) einen eigenen Halter (18) für die Betätigungseinrichtung (6) aufweist, der nicht von der Selbstverstärkungseinrichtung (15) mit einer Kraft oder einem Moment beaufschlagt wird.

2. Selbstverstärkende Scheibenbremse nach Anspruch 1, **dadurch gekennzeichnet, dass** der Halter (18) an einer Stelle mit dem Bremssattel (2) verbunden ist, die sich auf einer gegenüber liegenden Seite der Bremsscheibe (3) wie der Reibbremsbelag (5) befindet.

3. Selbstverstärkende Scheibenbremse nach Anspruch 1, **dadurch gekennzeichnet, dass** der Halter (18) einen höheren Elastizitätsmodul als der Bremssattel (15) aufweist.

4. Selbstverstärkende Scheibenbremse nach Anspruch 1, **dadurch gekennzeichnet, dass** die Scheibenbremse (1) eine mechanische Selbstverstärkungseinrichtung (15) aufweist.

5. Selbstverstärkende Scheibenbremse nach Anspruch 4, **dadurch gekennzeichnet, dass** die Selbstverstärkungseinrichtung (15) einen Rampenmechanismus mit einer Rampe aufweist, die in einem Winkel zur Bremsscheibe (3) verläuft, an der sich der Reibbremsbelag (5) abstützt und an der der Reibbremsbelag (5) entlang beweglich ist.

6. Selbstverstärkende Scheibenbremse nach Anspruch 1, **dadurch gekennzeichnet, dass** die Scheibenbremse (1) eine elektromechanische Betätigungseinrichtung (6) aufweist.

## Claims

1. Self-energizing disc brake, having a brake calliper (2), in which a friction brake lining (5) is arranged, having an actuating device (6), by way of which the friction brake lining (5) can be pressed against a brake disc (3), and having a self-energizing device (15) which converts a frictional force which is exerted, when the disc brake (1) is actuated, by the rotating brake disc (3) on the friction brake lining (5) which is pressed against it into a pressing force which presses the friction brake lining (5) against the brake disc (3), **characterized in that** the disc brake (1) has a dedicated holder (18) for the actuating device (6), which dedicated holder (18) is not loaded with a force or a moment by the self-energizing device (15).

2. Self-energizing disc brake according to Claim 1, **characterized in that** the holder (18) is connected to the brake calliper (2) at a point which is situated on an opposite side of the brake disc (3) to the friction brake lining (5).

3. Self-energizing disc brake according to Claim 1, **characterized in that** the holder (18) has a greater modulus of elasticity than the brake calliper (15).

4. Self-energizing disc brake according to Claim 1, **characterized in that** the disc brake (1) has a mechanical self-energizing device (15).

5. Self-energizing disc brake according to Claim 4, **characterized in that** the self-energizing device (15) has a ramp mechanism with a ramp which extends at an angle to the brake disc (3), on which the friction brake lining (5) is supported and along which the friction brake lining (5) can be moved.

6. Self-energizing disc brake according to Claim 1, **characterized in that** the disc brake (1) has an electromechanical actuating device (6).

## Revendications

1. Frein à disque auto-amplifiant, comprenant un étrier de frein (2), dans lequel est disposée une garniture de frein à friction (5), un dispositif d'actionnement (6) avec lequel la garniture de frein à friction (5) peut être pressée contre un disque de frein (3), et un dispositif d'auto-amplification (15), qui convertit une force de frottement exercée lorsque le frein à disque (1) est actionné par le disque de frein (3) rotatif sur la garniture de frein à friction (5) pressée contre lui en une force de pression, qui presse la garniture de frein à friction (5) contre le disque de frein (3), **caractérisé en ce que** le frein à disque (1) présente un support propre (18) pour le dispositif d'actionnement (6), qui n'est pas sollicité avec une force ou un couple par le dispositif d'auto-amplification (15).

2. Frein à disque auto-amplifiant selon la revendication 1, **caractérisé en ce que** le support (18) est connecté à l'étrier de frein (2) en un emplacement qui se situe sur un côté du disque de frein (3) opposé à la garniture de frein à friction (5).

3. Frein à disque auto-amplifiant selon la revendication 1, **caractérisé en ce que** le support (18) présente un module d'élasticité plus élevé que l'étrier de frein (2).

4. Frein à disque auto-amplifiant selon la revendication 1, **caractérisé en ce que** le frein à disque (1) présente un dispositif d'auto-amplification (15) mécanique.

5. Frein à disque auto-amplifiant selon la revendication 4, **caractérisé en ce que** le dispositif d'auto-amplification (15) présente un mécanisme de rampe avec une rampe qui s'étend suivant un certain angle par rapport au disque de frein (3), sur laquelle s'appuie la garniture de frein à friction (5) et le long de laquelle la garniture de frein à friction (5) peut être déplacée.

6. Frein à disque auto-amplifiant selon la revendication 1, **caractérisé en ce que** le frein à disque (1) présente un dispositif d'actionnement (6) électromécanique.
